# FASCICULE DE BREVET EUROPEEN

(11) **EP 2 344 570 B1**
(45) Date de publication et mention de la délivrance du brevet: **19.12.2012**
(21) Numéro de dépôt: 09741325.6
(22) Date de dépôt: 21.09.2009
(51) Int. Cl.: C08J 3/09, H01B 1/12, H01G 9/20, C08L 63/00

(54) **COMPOSITION DURCISSABLE GELIFIEE CHIMIQUEMENT A BASE DE RESINES EPOXY-AMINE ET DE LIQUIDE IONIQUE**
CHEMISCH GELIERTE HÄRTBARE ZUSAMMENSETZUNG AUF BASIS VON EPOXY-AMIN-HARZEN UND IONISCHEN FLÜSSIGKEITEN
CHEMICALLY GELLED CURABLE COMPOSITION BASED ON EPOXY-AMINE RESINS AND ON IONIC LIQUIDS

(30) Priorité: 02.10.2008 FR 0805448
(43) Date de publication de la demande: 20.07.2011
(73) Titulaire: IFP Energies nouvelles, 92852 Rueil-Malmaison Cedex (FR)
(72) Inventeur: GONZALEZ, Serge, F-69150 Décines (FR); SAUVANT-MOYNOT, Valérie, F-69006 Lyon (FR); VALLET, Jacques, F-69008 Lyon (FR); GRENIER, Jacky, F-38890 Vignieu (FR)
(86) Numéro de dépôt international: PCT/FR2009/001112
(87) Numéro de publication internationale: WO 2010/037918

(56) Documents cités:
- WO-A-2005/116161
- DATABASE WPI Week 200437 Thomson Scientific, London, GB; AN 2004-394216 XP002516588 & JP 2004 098199 A (CHEMIPRO KASEI KK) 2 avril 2004 (2004-04-02)
- DATABASE WPI Week 200480 Thomson Scientific, London, GB; AN 2004-806904 XP002516589 & JP 2004 311079 A (CHEMIPRO KASEI KK) 4 novembre 2004 (2004-11-04)

## Description

### Domaine de l'invention

L'invention concerne des compositions durcissables, par exemple thermodurcissables, gélifiées chimiquement, à base de résines époxy-amine et de liquides ioniques. L'invention s'applique avantageusement aux véhicules hybrides ou électriques. Les compositions durcissables selon l'invention peuvent être utilisées comme électrolyte ou membrane électrolytique dans les systèmes de stockage de l'énergie électrique, en particulier dans les batteries (Li-Ion par exemple).

### Art antérieur

Les batteries rechargeables sont des systèmes de stockage de l'énergie électrique particulièrement prometteurs pour des applications de transport (véhicules électriques hybrides VEH et véhicules électriques VE). Les batteries lithium-ion notamment offrent une meilleure densité et/ou puissance énergétique que la technologie Ni-MH actuellement utilisée dans les VEH commerciaux, et les designs envisageables sont également plus variés avec un coût de fabrication réduit.

Toutefois, le cahier des charges imposé aux systèmes de stockage embarqués est très sévère en termes de performance et de sécurité dans des conditions de service de routine, ou extrêmes (surcharge, températures élevées ou inférieures à 0°C). Potentiellement inflammables en cas de court-circuit, les batteries au lithium cylindriques ou prismatiques comportant un électrolyte liquide à base de carbonates d'alkyles, couramment commercialisées pour l'électronique portable, n'offrent pas des conditions de sécurité acceptables pour les applications Véhicule Électrique Hybride ou Véhicule Electrique. De ce fait, les polymères et gels de polymère sont étudiés comme électrolytes des batteries Li-ion.

Les batteries Li-ion/polymère développées jusqu'alors répondent aux critères de sécurité accrue, d'allègement et de design optimisés pour les applications de transport, mais la plage de fonctionnement est restreinte aux températures élevées, ce qui suppose de maintenir la batterie à des températures supérieures à 60°C pour obtenir les performances requises.

Le brevet US 2002/0136958 A1 présente par exemple un gel d'électrolyte pour des batteries rechargeables qui est le résultat de la réaction d'un composé A comprenant un groupement amine et d'un composé B comportant une fonction époxyde ou un groupement halogène en présence d'un liquide comprenant un sel, choisi parmi les solvants organiques traditionnels à base de carbonate d'alkyles.

Hedden et al. (Polymer 48 (2007) 6077-6085) détaillent également l'étude de gels de polymères résultant de la réaction de polyéthylèneimine avec un diépoxyde de type DGEBA (Diglycidyléther de bisphénol A) en présence de DMF (Diméthylformamide). L'inconvénient majeur est que les solvants organiques traditionnels ne présentent pas une bonne stabilité thermique jusqu'à 200°C, ce qui rend leur mise en oeuvre délicate. Le chauffage de ces compositions conduit à une évaporation (partielle au moins) du solvant, ce qui contraint à polymériser les monomères à basse température. Les temps de gélification dans ces conditions sont relativement longs. Par ailleurs, la stabilité thermique des gels obtenus est médiocre quand la température s'élève.

Les liquides ioniques (LI) (dont le point de fusion est inférieur à 100°C) sont des composés qui possèdent des propriétés particulières : température de décomposition élevée, tension de vapeur faible ou inexistante, et un pouvoir de solvatation élevé. Suivant leur structure chimique, ils restent liquides dans une large plage de température et possèdent une bonne conductivité ionique. Ces composés sont constitués d'un cation de type ammonium, sulfonium, phosphonium, imidazolium, pyridinium, pyrrolidinium (par exemple) couplé à un anion de nature minérale (Li+, FeCl₄⁺,PF₆⁺, ...), organique (CF₃SO₂)₂N⁻, CF₃CO₂⁻, ....) mixte ou autre.

De nombreuses publications et brevets décrivent les applications des liquides ioniques et ces composés ont trouvé des applications pilotes ou industrielles dans des domaines variés (synthèse chimique, solvant (transport, extraction), ...).

Différentes études ont été réalisées afin d'obtenir des gels polymères comportant des liquides ioniques. Les gels de polymères à base de PEO (Polyéthylèneoxyde), PVDF-HFP (polyfluorure de vinylidène - hexafluoropropène), PMMA (polymétacrylate de méthyle) ou PAN (polyacrylonitrile) gonflés par un solvant possédant une constante diélectrique élevée, en particulier par un liquide ionique, et additivés par un sel assurant la conductivité des ions constituent l'électrolyte de dispositifs électrochrome, de supercondensateurs et de batteries lithium ou lithium-ion par exemple.

Le brevet WO 2005/116161 A1 décrit par exemple un dispositif électrochrome où le précurseur de l'électrolyte est constitué d'un liquide ionique, d'un monomère vinylique et d'un amorceur de polymérisation capable de former un gel physique par polymérisation in situ.

Cependant ce type de gel présente un domaine de stabilité thermique limité par la transition réversible entre l'état gel et l'état liquide qui intervient au delà d'une certaine température et qui entraîne les mêmes risques de fuite que les électrolytes liquides, pour une application en batterie de traction.

Nous avons découvert une nouvelle formulation à base d'au moins un liquide ionique et de polymère durcissable offrant une combinaison de propriétés avantageuses, en termes de mise en oeuvre, de stabilité thermique, de conductivité ionique et de tenue mécanique, en particulier pour l'application aux électrolytes, notamment pour les batteries agissant par mécanismes d'insertion et désinsertion ioniques, comme les batteries Li-ion.

La formulation de la composition selon l'invention permet de résoudre l'ensemble des inconvénients évoqués des solutions de l'art antérieur, notamment dans un contexte de sécurité à bord d'un véhicule hybride ou électrique. En outre, l'utilisation de liquides ioniques permet de travailler dans des conditions opératoires que ne permettent pas les solvants organiques communément utilisés dans les systèmes de batteries, notamment dans les systèmes de batteries Li-ion.

### Objets de l'invention

La présente invention concerne une composition durcissable gélifiée chimiquement comprenant au moins un composé organique de type époxyde comportant une fonctionnalité supérieure à 1, au moins une amine et au moins un liquide ionique.

De manière plus précise, l'amine présente dans la composition est constituée par au moins un composé organique comportant au moins deux fonctions amines primaires, ou au moins une fonction amine primaire et une ou plusieurs fonctions amine secondaire ou amine tertiaire.

Dans le cas des systèmes diépoxy-diamine primaire par exemple, la fonctionnalité peut être définie comme le nombre de sites actifs pour une mole de monomère susceptibles de donner une réaction chimique. A titre d'exemple, cette fonctionnalité est 2 dans le cas d'une mole de diépoxyde, car la molécule contient deux fonctions oxirane. La fonctionnalité est de 4 pour une mole de diamine primaire qui contient deux fonctions amine primaire, car une fonction amine primaire peut réagir avec deux fonctions époxydes.

L'invention concerne également un procédé de préparation de ladite composition par mélange des composants époxyde, amine et liquide ionique, et polymérisation (avec ou sans traitement thermique), sans dégagement de composé volatil.

L'invention concerne aussi un procédé de préparation de l'assemblage solide électrode-électrolyte-électrode d'une cellule élémentaire de batterie comprenant ladite composition.

L'invention concerne enfin l'utilisation de ladite composition durcissable comme électrolyte, notamment pour les systèmes d'accumulation d'énergie (batteries, supercondensateurs) et de conversion d'énergie (dispositifs électrochromes, cellules solaires photoélectrochimiques).

Les batteries rechargeables ou batteries secondaires sont des systèmes de stockage réversibles de l'énergie électrique sous forme électrochimique, constitués de deux électrodes poreuses imprégnées d'électrolyte et séparées par une membrane isolante électriquement. Le principe général de fonctionnement des batteries repose sur la mise en oeuvre de réactions électrochimiques réversibles d'oxydation et de réduction aux interfaces électrodes-électrolyte, l'électrolyte assurant le transport des charges ioniques entre les électrodes.

Les supercondensateurs sont des dispositifs de stockage de l'électricité rechargeables, constitués de deux électrodes poreuses de grande surface spécifique séparées par une membrane isolante électriquement et imprégnées d'électrolyte. Le principe général de fonctionnement des supercondensateurs repose sur la séparation de charges ioniques et la formation d'une double couche à l'interface d'un électrolyte et d'une électrode polarisable, l'électrolyte assurant le transport des charges ioniques entre les électrodes. Lorsqu'une différence de potentiel est appliquée aux bornes d'un supercondensateur, les deux électrodes se comportent comme deux condensateurs en série et stockent les charges aux interfaces.

Les dispositifs électrochromes sont des dispositifs permettant de faire varier la transmission de la lumière du spectre solaire par l'application d'un potentiel.

Les cellules solaires photoélectrochimiques sont des systèmes de conversion de l'énergie solaire en énergie électrique.

### Description de l'invention

### Résumé de l'invention

La présente invention concerne une composition durcissable gélifiée chimiquement comprenant au moins un composé organique de type époxyde comportant une fonctionnalité supérieure à 1, au moins une amine et au moins un liquide ionique.

De préférence, le groupe époxyde est choisi parmi les époxydes aromatiques, cycloaliphatiques, hétérocycliques, ou aliphatiques, substitués ou non par des chaînes aliphatiques, cycloaliphatiques, aromatiques ou hétérocycliques ou des éléments choisis parmi le fluor et le brome, la chaîne principale ou les substituants comportant éventuellement des segments de chaîne carbonés et/ou hydrocarbonés comprenant des éléments autres que le carbone, l'hydrogène et l'oxygène et des groupements susceptibles de réagir chimiquement, utilisés seuls ou en mélange.

De préférence, le groupe amine est choisi parmi les dérivés organiques comportant au moins deux fonctions amine primaire, ou au moins une fonction amine primaire et une ou plusieurs fonctions amine secondaire ou une ou plusieurs fonctions amine tertiaire, les amines étant de type aromatique, hétérocyclique, cycloaliphatique ou aliphatique substituées ou non substituées par des chaînes aliphatiques, la chaîne principale ou les substituants comportant éventuellement des éléments choisis parmi le silicium, le fluor, le soufre, le chlore et le brome.

De préférence, le cation du liquide ionique est choisi parmi les tétraalkylammonium, les cations provenant d'amines cycliques aromatiques (di- et tri, et tetraalkylimidazolium, alkylpyridinium) ou provenant d'amines cycliques aliphatiques (di et tri alkyl pipéridinium, dialkylpyrrolidinium, dialkylmorpholinium), les tétraalkylphosphonium et les trialkylsulfonium et l'anion du liquide ionique est choisi parmi les halogénures (F⁻, Cl⁻, Br⁻, I⁻...), les ions nitrate, phosphate, sulfate, perchlorate [ClO₄]⁻ , [BF₄]⁻, [PF₆]⁻, [AsF₆]⁻, [N(CN)₂]⁻, [C(CN)₃]⁻ , les ions [C₄F₉SO₃]⁻, trifluoroacétate [CF₃CO₂]⁻, triflate [CF₃SO₃]⁻, imidures [N(CF₃SO₂)₂]⁻, [CF₃CONCF₃SO₂]⁻, [C(CF₃SO₂)₃]⁻, acétate [CH₃CO₂]⁻ et formiate [HCO2]⁻.

La composition durcissable selon l'invention peut comporter des additifs solides ou liquides choisis dans le groupe formé par les polymères, les sels, les charges choisies parmi les silices modifiées (greffées) ou non modifiées, les alumines, les oxydes de titane, les oxydes d'aluminium, les titanates, les argiles modifiées ou non modifiées, les micas, les céramiques, les zéolites, les fibres, les composés tensio-actifs .

Dans un mode de réalisation, la composition durcissable comprend au moins un sel de lithium.

Le rapport stoechiométrique époxyde/amine r (rapport des produits de la fonctionnalité par la concentration de chaque monomère) est avantageusement compris entre 0,25 et 1,75.

L'invention concerne également un procédé de préparation d'une composition selon l'invention dans lequel on effectue :
a. une étape de mélange d'au moins un composé organique de type époxyde comportant une fonctionnalité supérieure à 1, d'au moins une amine et d'au moins un liquide ionique et des additifs éventuels;
b. une étape de polymérisation du polymère polyépoxyde-polyamine.

De préférence, l'étape de polymérisation est réalisée par traitement thermique.

De préférence, on choisit le groupe époxyde et le groupe amine tels que le couple polyépoxyde-polyamine en mélange époxy-amine seul après polymérisation conduise à une température de transition vitreuse Tg inférieure ou égale à 150°C, et de manière encore plus préférée inférieure ou égale à 50°C.

L'invention concerne également un électrolyte gélifié comprenant la composition selon l'invention.

L'invention a également pour objet un système d'accumulation ou de conversion d'énergie comprenant ledit électrolyte.

Le système de conversion d'énergie peut être de type dispositif électrochrome ou cellule solaire photoélectrochimique.

Le système d'accumulation d'énergie peut être de type batterie ou supercondensateur.

De préférence, la batterie est une batterie agissant par mécanismes d'insertion et désinsertion ioniques, de manière plus préférée une batterie Li-Ion.

L'invention concerne également l'utilisation d'une batterie et/ou d'un supercondensateur tels que décrits précédemment pour le véhicule hybride électrique ou le véhicule électrique.

L'invention concerne enfin un procédé de préparation d'une cellule élémentaire de batterie comprenant les étapes suivantes :
a) dépôt en continu par enduction de la composition selon l'invention sur une électrode,
b) recouvrement de l'électrode enduite par la seconde électrode,
c) durcissement in situ de la composition
et répétition éventuelle des étapes a), b), c) pour constituer un assemblage solide mono ou multi couches "électrode-électrolyte-électrode".

### Description détaillée de l'invention

D'une manière générale, la composition selon l'invention comprend au moins un monomère de type époxyde multifonctionnel, au moins un monomère de type amine (primaire monofonctionnel ou multifonctionnel ou secondaire multifonctionnel), et au moins un liquide ionique.

La mise en oeuvre de la composition se fait par mélange des composants suivie d'une étape de polymérisation du polymère époxy-amine durcissable, en chauffant au besoin.

Les gels de polymère obtenus sont des réseaux tridimensionnels plastifiés par au moins un liquide ionique. La cohésion entre les chaînes macromoléculaires est assurée par des liaisons covalentes (gels chimiques) qui assurent une stabilité importante dans le temps et donnent au gel un caractère irréversible lors d'une élévation en température. Ce n'est pas le cas des gels physiques, dont la cohésion est assurée par des interactions inter chaînes ioniques, polaires ou par liaisons hydrogène.

Les résines durcissables formulées à partir de résines polyépoxydes (ou de monomères époxydes - époxy ou comportant un groupement oxirane ou glycidyl, suivant les appellations) en présence de durcisseurs de type amine (ou de monomère amine) constituent des réseaux tridimensionnels réticulés chimiquement, c'est à dire qui gardent irréversiblement une cohésion au chauffage jusqu'à la dégradation thermique au delà de 250°C. Le passage d'un comportement vitreux rigide à un comportement caoutchoutique souple est marqué par la transition vitreuse associée au développement d'une mobilité macromoléculaire généralisée dans le réseau époxy-amine. Les réseaux époxy-amine formulés présentent des propriétés mécaniques modulables, suivant la densité des noeuds de réticulation dépendant de la fonctionnalité et de la longueur des monomères époxydes et amines, également suivant la flexibilité des monomères gouvernée notamment par leur nature aromatique, cycloaliphatique ou aliphatique.

En particulier, les formulations de résines époxy-amines sont avantageusement choisies pour obtenir une température de transition vitreuse T_{g} faible, typiquement en dessous de la température ambiante.

De préférence, on choisit un couple polyépoxyde-polyamine qui, en mélange époxy-amine seul après polymérisation conduit à une température de transition vitreuse Tg inférieure ou égale à 150°C, et d'une manière préférée inférieure ou égale à 50°C. Le rapport massique entre les monomères (époxyde et amine) et le liquide ionique est compris entre 1% et 99%, le plus souvent entre 2% et 98%, et d'une manière préférée entre 5% et 95%.

### Les polyépoxydes

Tous les monomères époxydes peuvent être utilisés dans la composition. On pourra indifféremment utiliser un époxyde aromatique, cycloaliphatique, hétérocyclique, ou aliphatique. Ces polyépoxydes pourront porter des substituants tels que des chaînes aliphatiques, cycloaliphatiques, aromatiques ou hétérocycliques ou des éléments tels que le fluor et le brome par exemple. Ces substituants ou la chaîne principale, pourront contenir des segments de chaîne carbonés et/ou hydrocarbonés comportant des éléments autres que le carbone, l'hydrogène et l'oxygène et tel que le silicium, le fluor, le chlore, le brome et l'azote par exemple et des groupements susceptibles de réagir chimiquement par réaction radicalaire, réaction anionique ou cationique, condensation ou cycloaddition par exemple, notamment les groupements vinyliques, allyliques, hydroxyles, esters, nitriles.

Les époxydes utilisés dans la composition peuvent être utilisés seuls ou en mélange et ont de manière avantageuse un nombre de fonctions époxydes supérieur ou égal à deux, de préférence de deux à quatre. On se reportera aux différents ouvrages de la littérature qui décrivent la chimie, la structure, la réactivité des monomères époxydes tels que notamment : "Handbook of Epoxy Resins," Lee&Neville, Mc Graw-Hill (1982),"Chemistry and technology of the epoxy Resins," B. Ellis, Chapman Hall (1993), New York et "Epoxy Resins Chemistry and technology," C. A. May, Marcel Dekker, New York (1988).

Les polyépoxydes aromatiques préférés sont choisis parmi les résines phénol-novolaques et les résines crésol-novolaques, les résines époxydes du bisphénol A, du bisphenol F, du bisphénol A/F, de la méthylène di-aniline, du para-amino phénol, les époxypropylphtalates. Parmi les résines hétérocycliques, on choisit le N,N',N"-triglycidyl isocyanurate par exemple.

Parmi les polyépoxydes cycloaliphatiques préférés, nous pouvons citer : le bis-(2,3-époxycyclopentyl éther), le 1,4-cyclohexane diméthanol diglycidyl éther.

Parmi les polyépoxydes aliphatiques préférés, nous pouvons citer le diglycidyléther du diéthylène glycol, le 1,4-butanediol diglycidyléther, le 1,6-hexanediol diglycidyléther, les polypropylèneglycols polyépoxydes, les polyéthyléneglycol polyépoxydes, le triglycidyléther du triméthyolpropane.

### Les amines

De façon générale, tous les composés organiques comportant au moins deux fonctions amines primaires, ou au moins une fonction amine primaire et une ou plusieurs fonctions amine secondaire ou amine tertiaire sont susceptibles de rentrer dans la composition. On peut utiliser un mélange de deux ou plusieurs monomères de type amine. On peut utiliser des dérivés organiques comportant au moins deux fonctions amine primaire, ou au moins une fonction amine primaire et une ou plusieurs fonctions amine secondaire ou une ou plusieurs fonctions amine tertiaire. Les monomères amines pourront être de type aromatique, hétérocyclique, cycloaliphatique ou aliphatique substituées ou non substituées par des chaînes aliphatiques. La chaîne principale ou les substituants peuvent comporter des éléments tel que le silicium, le fluor, le soufre, le chlore et le brome par exemple.

Parmi les amines aromatiques, on utilise de préférence des amines aromatiques substituées peu toxiques telles que la 4,4'-aminodiphénylsulfone, la 4,4'-méthylène-bis(2,6-diéthylaniline), la 4,4'-(phénylène-diisopropyl)-bis(2,6-dipropyl-aniline), la 4,4'-méthylène-bis(2-isopropyl-6-méthyl-aniline) ou M-MIPA, la 4,4'-méthylène-bis(2,6-diéthylaniline) ou M-DEA, la 4,4'-méthylène-bis(3-chloro-2,6-diéthylaniline) ou M-CDEA, la 4,4'-(phénylène-düsopropyl)-bis(2,6-diméthyl-aniline), la 4,4'-(phénylène-diisopropyl)-bis(2,6-diéthyl-aniline), la 4,4'-(phénylène-diisopropyl)-bis(2,6-dipropyl-aniline), la 4,4'-(phénylène-düsopropyl)-bis(2,6-düsopropyl-aniline), la 4,4'-(phénylène-diisopropyl)-bis(2,6-diméthyl-3-chloro-aniline), la 4,4'-(phénylènediisopropyl)-bis(2,6-diéthyl-3-chloro-aniline), la 4,4'-(phénylène-diisopropyl)-bis(2,6-dipropyl-3-chloro-aniline), la 4,4'-(phénylène-diisopropyl)-bis(2,6-diisopropyl-3-chloro-aniline), la 3,3'-(phénylène-düsopropyl)-bis(2,6-diméthyl-aniline),la 3,3'-(phénylène-düsopropyl)-bis(2,6-diéthyl-aniline),la 3,3'-(phénylène-diisopropyl)-bis(2,6-dipropyl-aniline), la 3,3'-(phénylène-diisopropyl)-bis(2,6-diméthyl-3-chloro-aniline), la 3,3'-(phénylène-diisopropyl)-bis(2,6-diéthyl-3-chloro-aniline), la 3,3'-(phénylène-diisopropyl)-bis(2,6-dipropyl-3-chloro-aniline), la 3,3'-(phénylène-diisopropyl)-bis(2,6-diisopropyl-aniline) et la 3,3'-(phénylène-diisopropyl)-bis(2,6-diisopropyl-3-chloro-aniline) par exemple.

Parmi les amines cycloaliphatiques d'une façon préférée on peut utiliser des amines telles que la 4,4'- diamino dicyclohexylméthane, la 3,3'-diméthyl-4,4'-dicyclohexylméthane, l'isophorone diamine, la menthane diamine.

D'une façon préférée on utilise des monomères amines primaires aliphatiques telles que l'éthylènediamine, diéthylènetriamine, triéthylènetétramine, Pipérazinoéthyléthylènediamine, diaminoéthylpipérazine, aminoéthyltris-aminoéthylamine, aminoéthyldiaminoéthylpipérazine, aminoéthylpipérazinoéthyléthylènediamine, aminoéthylpipérazine, aminoéthyléthanolamine (comme la série des monomères amines commercialisés par Dow Chemical), des monomères amines de type polyétheramine élaborée à partir d'oxyde d'éthylène, d'oxyde de propylène, ou de mélange oxyde d'éthylène/oxyde de propylène (comme la série des Jeffamines commercialisées par Hunstman par exemple), La 4,7,10-trioxatridécane-1,13-diamine, les poly-Tétrahydrofuranamine (commercialisées par BASF), les polyamidoamines, des polyaminoimidazolines, des polyéthylèneimines (PEI) non branchés ou hyperbranchés et des polyalkylèneamines.

Les amines secondaires dérivées des composés ci-dessus peuvent être également utilisées.

Les composés organiques réactifs préférés qui peuvent entrer dans la composition sont notamment décrits de manière détaillée dans la demande de brevet US/2008/0188591A1.

### Les liquides ioniques

En règle générale, on définit les liquides ioniques (LI) comme des sels fondus dont le point de fusion est inférieur à 100°C. On peut représenter la structure chimique d'un liquide ionique par un anion (A⁻) et un cation (B⁺). Dans la littérature, et plus particulièrement, les RTILs (room temperature ionic liquids) sont définis comme des sels fondus liquides à température ambiante. Les propriétés physiques et chimiques de ces composés sont largement influencées par la nature de l'anion et du cation.

De préférence, on choisit des cations et des anions résistants à la chaleur, à la réduction et à l'oxydation et qui présentent dans le cas d'une utilisation comme électrolyte de batterie ou accumulateur une large fenêtre électrochimique.

Sans limiter la portée de l'invention, on peut utiliser les liquides ioniques seuls ou en mélange, dont le cation est choisi parmi les tétraalkylammonium, les cations provenant d'amines cycliques aromatiques (di-, tri- et tetra-alkylimidazolium, alkylpyridinium) ou provenant d'amines cycliques aliphatiques (di et tri alkyl pipéridinium, dialkylpyrrolidinium, dialkylmorpholinium), ou parmi les tétraalkylphosphonium, les trialkylsulfonium et l'anion est choisi parmi les halogénures (F⁻, Cl⁻, Br⁻, I⁻...), les ions nitrate, phosphate, sulfate, perchlorate [ClO₄]⁻ [BF₄]⁻, [PF₆]⁻, [AsF₆]⁻, [N(CN)₂]⁻, [C(CN)₃]⁻ ou parmi d'autres anions organiques tels que les ions [C₄F₉SO₃]⁻, trifluoroacétate [CF₃CO₂]⁻, triflate [CF₃SO₃]⁻, imidures [N(CF₃SO₂)₂]⁻, [CF₃CONCF₃SO₂]⁻, [C(CF₃SO₂)₃]⁻, acétate [CH₃CO₂]⁻ et formiate [HCO₂]⁻.

L'anion (A⁻) peut être par exemple : BF₄⁻, PF₆⁻, CₙF₂ₙ₊₁CO₂⁻, CₙF₂₊₁SO₃⁻, (C₂F₅SO²)₂N⁻, (CF₃SO₂)₂N⁻, (CF₃SO₂)₃C⁻, (CN)₂N⁻ etc ...

Le cation (B⁺) peut être par exemple un cation hétérocyclique comme un pyrrolium, pyridinium, imidazolium, pyrazolium, benzimidazolium, indolium, quinolinium, pyrrolidinium, pipéridinium, pipérazinium, morpholinium ou un alkylammonium. Le cation pourra comporter un ou plusieurs substituants alkyl, cycloalkyl, phényl ou des fonctions réactives telles que acide, ester, hydroxyle, isocyanate par exemple ou encore un ou plusieurs groupements polymérisables comme des vinyls, acryls, métacryls, allyls, ou oxétanes par exemple.

De préférence, on utilise un liquide ionique dont le point de fusion est inférieur à 100°C et dont les propriétés sont compatibles avec l'application visée.

### Procédé de préparation de la composition durcissable et de l'électrolyte selon l'invention

Le polymère résultant de la réaction entre au moins un monomère époxyde tel que décrit précédemment et au moins un monomère amine tels que décrit précédemment est plastifié par un liquide ionique. Afin d'adapter les caractéristiques de la composition, on peut travailler en stoechiométrie de fonctions époxyde et amine ou en déséquilibre stoechiométrique.

La stoechiométrie peut être définie comme la quantité ou la proportion de substances qui va donner une réaction chimique.

Le rapport stoechiométrique r peut être défini comme le rapport des produits de la fonctionnalité par la concentration de chaque monomère.

La fonctionnalité peut être définie comme le nombre de sites actifs pour une mole de monomère susceptibles de donner une réaction chimique. Comme écrit précédemment, cette fonctionnalité est par exemple 2 dans le cas d'une mole de diépoxyde car la molécule contient deux fonctions oxirane. La fonctionnalité est de 4 pour une mole de diamine primaire qui contient deux fonctions amine primaire, car une fonction amine primaire peut réagir avec deux fonctions époxydes.

Dans le cas de produits commerciaux, le calcul de r est effectué à partir de l'indice d'époxyde exprimé en équivalent par kilogramme (Eq/kg) ou de l'équivalent époxyde exprimé en gramme de résine par équivalent (g/Eq). Dans le cas d'une diamine ou pourra utiliser la valeur d'amine qui correspond au nombre d'équivalents d'amine dans 1 kg de substance ou l'indice d'amine qui correspond à la quantité d'amine dans un gramme de substance. Les normes ISO 3001 et ISO 9702 indiquent les méthodes de détermination.

On respecte avantageusement un rapport compris entre 0,25 et 1,75, le plus souvent r est compris entre 0,75 et 1,25 et d'une manière préférée r sera compris entre 0,95 et 1,05.

Afin d'adapter les propriétés de la composition durcissable, on peut utiliser des agents "extendeurs" de chaîne comme des amines secondaires multifonctionnelles par exemple, des agents assouplissants comme des monoamines primaires et des agents limiteurs de chaînes ou des agents de fin de chaînes monofonctionnels comme des monoépoxydes ou des monoamines secondaires par exemple ou n'importe quel agent de fin de chaînes connu de l'homme de l'art.

Il est possible également d'utiliser un agent de fin de chaîne comprenant dans sa structure chimique des groupements réactifs (susceptibles de donner une réaction chimique de couplage).

La réaction de polymérisation des monomères et la formation du réseau tridimensionnel peut être obtenue de différentes manières, par traitement thermique, ou à température ambiante si la réactivité des monomères le permet, rayonnement UV et radiations par exemple. La spécificité de la composition permet d'utiliser le système de polymérisation par traitement thermique à température élevée sans la limitation associée à l'évaporation du solvant liquide, puisque le liquide ionique n'est pas volatil. D'une manière préférée on applique un traitement de ce type afin d'effectuer la réaction de polymérisation, ce qui réduit le temps de polymérisation.

La composition peut également comporter des agents accélérateurs de la réaction amine-époxyde ou permettant l'homopolymérisation des groupements oxiranes. On peut citer par exemple les alcools, phénols, les imidazoles, les dérivés du bore, les amines tertiaires.

La modification (amélioration) des propriétés mécaniques et/ou de conductivité électrique et thermique et/ou de la rhéologie est souvent le résultat de l'addition d'additifs solides ou liquides tels que des polymères, des sels, des charges, des composés tensio-actifs etc...

On peut utiliser des charges telles que par exemple des silices modifiées (greffées) ou non modifiées, des alumines, des oxydes de titane, des oxydes d'aluminium, des titanates, des argiles modifiées ou non modifiées, des micas, des céramiques, des zéolites, des fibres. Toutes ces charges peuvent être présentes à l'état de nano charges, c'est à dire de charges de taille nanométrique.

On peut également modifier la rhéologie de la composition par solubilisation de polymères de plus ou moins haute masse (Polyoxyde d'éthylène, Poly(fluorure de vinylidène - hexafluoropropène) par exemple). Tous les polymères ou oligomères statistiques, alternés, séquencés de type copolymères à blocs solubles dans les liquides ioniques peuvent être utilisés.

La composition durcissable gélifiée chimiquement peut être mise en oeuvre à l'aide des dispositifs classiques connus de l'homme du métier. A cet effet, on pourra utiliser des dispositifs tels que des moules afin de réaliser des plaques, des systèmes de dépôts localisés, comme des seringues par exemple, permettant d'encapsuler ou recouvrir un matériau donné ou encore des applicateurs permettant de réaliser des films. Il est possible également d'utiliser les systèmes de dépôt en continu sur film, bande métallique ou d'une autre composition chimique organique ou minérale par enduction, par exemple à l'aide d'un applicateur de film ou filmographe.

Les résines de type polyépoxydes/polyamines sont plastifiées par les liquides ioniques : les matériaux plastifiés sont homogènes ou hétérogènes (ségrégation de phases) suivant la nature des composants. Pour certaines compositions, le matériau présente le phénomène de synérèse (agrégation spontanée des particules d'un gel, avec séparation éventuelle du liquide), qui peut être utile pour favoriser le transfert de charges ioniques de l'électrolyte aux électrodes.

Les électrolytes et membranes électrolytiques à base de la composition selon l'invention peuvent être préparés dans des environnements à teneurs en oxygène et eau réduites, par polymérisation in situ des monomères époxydes et amines en présence d'au moins un liquide ionique, la composition de départ étant éventuellement préalablement chargée en sels ou autres charges. Des caractérisations par des techniques d'analyse conventionnelles peuvent être effectuées sur la composition durcie. En particulier, des mesures de DSC permettent de déterminer la température de transition vitreuse T_{g} du polymère gélifié ; des mesures de thermogravimétrie (ATG) permettent d'établir la stabilité thermique des matériaux ; des mesures de conductivité ionique à température ambiante sont réalisées par spectroscopie d'impédance électrochimique.

### Applications de la composition selon l'invention

### Electrolyte

La composition durcissable de l'invention peut être formulée afin de répondre à une application précise.

Afin d'illustrer une des nombreuses applications de l'invention, on peut citer la réalisation d'électrolytes, pour des systèmes de conversion ou d'accumulation de l'énergie.

La composition durcissable plastifiée (gel chimique) selon l'invention peut servir de base à une composition d'électrolyte, notamment pour les batteries, pour les supercondensateurs, pour les dispositifs électrochromes ou pour les cellules solaires photoélectrochimiques.

Une composition pour dispositif électrochrome permet de faire varier la transmission de la lumière du spectre solaire par l'application d'un potentiel.

Une composition pour cellules solaires photoélectrochimiques permet de convertir l'énergie solaire en énergie électrique.

La composition selon l'invention peut également être utilisée comme composition de capteur (variation de la conductivité ionique σ suivant le milieu d'exposition).

Une telle composition de polymère de type polyépoxyde/polyamine plastifiée par un liquide ionique, servant de base à la formulation d'un électrolyte de type gel réticulé chimiquement, est intéressante pour sécuriser les batteries agissant par mécanismes d'insertion et désinsertion ioniques dans les électrodes, notamment les batteries Li-ion.

L'ajout de sels peut être pratiqué dans la composition selon l'invention, pour une application comme électrolyte de batterie, notamment les sels de lithium pour les batteries Li-ion, afin d'augmenter la concentration des porteurs de charges entre électrodes positive et négative. Dans la composition suivant l'invention, on peut utiliser notamment un sel comportant au moins un cation lithium et de préférence, LiPF₆, LiAsF₆, LiClO₄, LiN(CF₃SO₂)₂, LiBF₄, LiCF₃SO₃ et LiSBF₆ par exemple.

### Cellule élémentaire de batterie

L'invention concerne également un procédé de préparation d'une cellule élémentaire de batterie où la composition durcissable selon l'invention (jouant le rôle d'électrolyte) est déposée en continu par enduction sur une électrode, puis l'électrode enduite est couverte de la seconde électrode. Cette opération peut être éventuellement répétée une ou plusieurs fois pour constituer un assemblage multi-couches (avec adjonction de bandes ou feuilles isolantes). Le durcissement in situ effectué à chaud et/ou en continu permet de constituer un assemblage solide entre l'électrode, l'électrolyte et la seconde électrode. Une électrode est constituée de préférence d'une bande comprenant un collecteur métallique préalablement enduit d'un matériau d'électrode composite (poudres inorganiques avec un liant polymère).

De préférence, la batterie est une batterie secondaire agissant par mécanismes d'insertion et désinsertion ioniques, de manière très préférée une batterie de type lithium-ion.

La mise en série et/ou en parallèle de cellules élémentaires de batterie ainsi préparées peut permettre de constituer une batterie utilisable avantageusement dans un véhicule hybride électrique ou un véhicule électrique.

### Exemples

Les exemples suivants illustrent l'invention à titre non limitatif et présentent des compositions réalisées à partir des composés suivants :
Epoxydes :
   - 1,4-Butanediol diglycidyl ether (Aldrich), nommé C1,
   - Araldite DY-C commercialisé par HUNSTMAN, nommé C2
   - Araldite LY 556 commercialisé par HUNSTMAN, nommé C3
   - Epikote 862 commercialisé par RESOLUTION, nommé C4
   - GY 298 commercialisé par HUNSTMAN, nommé C5.
Amines :
   - Jeffamine EDR 148 commercialisé par HUNSTMAN, nommé C6
   - Jeffamine D 400 commercialisé par HUNSTMAN, nommé C7
   - Jeffamine D 2000 commercialisé par HUNSTMAN, nommé C8
   - Jeffamine M 600 commercialisé par HUNSTMAN, nommé C9
Liquides ioniques :
   - 1-Butyl-3-methylimidazolium bis(trifluoromethanesulfonyl)imide commercialisé par SOLVIONIC,nommé C10
   - 1-Butyl-1-methylpyrrolidinium bis(trifluoromethanesulfonyl)imide commercialisé par SOLVIONIC, nommé C11
Sel conducteur :
   - Bis (trifluorométhanesulfonyl) imide de Lithium commercialisé par SOLVIONIC, nommé C12
Charge (silice) :
   - Cab-O-Sil TS 720 commercialisé par Cabot corporation, nommé C13,
Solvants classiques :
   - DMF (Diméthylformamide) nommé C14
   - Carbonate d'éthylène (EC) nommé C15
   - Carbonate de propylène (PC) nommé C16.

### Exemples 1 à 4 : Préparation des compositions 1 à 4

Différentes méthodes de préparation de la composition peuvent être mises en oeuvre.

Une des méthodes de réalisation de la composition peut être décrite comme suit.

Dans un réacteur en verre propre et sec et sous azote sec, on solubilise dans le liquide ionique un sel de lithium. Pour des concentrations en sel élevées, on pourra avantageusement effectuer la solubilisation à chaud.

Dans un second réacteur en verre sous azote sec et à température ambiante, on introduit le polyépoxyde et l'amine. Après 10 minutes d'agitation, on introduit la solution de sel de lithium. Le mélange homogène est dégazé pendant 5 minutes à 50°C sous un vide de 5 mm de mercure. Il est ensuite versé dans un moule en verre constitué de deux plaques recouvertes d'un revêtement non adhésif séparé par un joint réglant l'épaisseur. Le moule est introduit dans une étuve ventilée où est effectué un traitement thermique de 3 heures à 50°C et de 4 heures à 100°C. La plaque obtenue est ensuite démoulée, déposée entre deux feuilles de papier adsorbant, puis séchée à 60°C sous un vide de 0,05 mm de mercure et stockée à l'abri de l'air.

Le tableau 1 reprend les formulations effectuées :

**Tableau 1**

| Exemple | C2 (%Pds) | C6 (%Pds) | C7 (%Pds) | C10 (%Pds) |
|---|---|---|---|---|
| 1 (non conforme) | 82,5 | 17,5 | X | 0 |
| 2 | 41,25 | 8,75 | X | 50 |
| 3 (non conforme) | 61,9 | X | 38,1 | 0 |
| 4 | 30,94 | X | 19,06 | 50 |

Le tableau 1 décrit deux compositions conformes à l'invention et deux compositions non conformes à l'invention (sans liquide ionique).

### Exemple 2 : Mesure de la température de transition vitreuse Tg

La mesure de la température de transition vitreuse Tg des polymères solides obtenus est effectuée à l'aide d'un appareil DSC Q100 de TA instruments de -70 à 200C sous azote avec une rampe de montée en température de 10°C/min.

**Tableau 2**

| Exemple | Tg (°C) |
|---|---|
| 1 | > 0 |
| 2 | < -5 |
| 3 | > -10 |
| 4 | < -10 |

Les résultats du tableau 2 ci-dessus indiquent une baisse de la valeur de la température de transition vitreuse du polymère par addition d'un liquide ionique.

Le liquide ionique agit donc comme un plastifiant du polymère..

### Exemples 5 à 9 : Préparation des compositions 5 à 9

Afin d'illustrer les applications comme électrolytes des polymères plastifiés par les liquides ioniques, on prépare les formulations détaillées dans les tableaux suivants :

**Tableau 3**

| Exemple | C2 (%Pds) | C6 (%Pds) 1 amine | C7 (%Pds) 1 autre amine | C10 (%Pds) | C12 (Pds) |
|---|---|---|---|---|---|
| 5 | 39,12 | 8,29 | 0 | 47,42 | 5,17 |
| 6 | 33,97 | 7,20 | 0 | 41,17 | 17,66 |
| 7 | 29,34 | 0 | 18,08 | 47,42 | 5,16 |
| 8 | 25,43 | 0 | 15,67 | 41,1 | 17,8 |
| 9 | 23,19 | 0 | 14,29 | 37,48 | 25,04 |

Dans la seconde série d'exemples, les compositions sont réalisées en faisant varier la nature des monomères amines et les teneurs en sels.

### Exemples 10 à 14 : Préparation des compositions 10 à 14

**Tableau 4**

| Exemple | C1 (%Pds) | C3 (%Pds) | C4 (%Pds) | C7(%Pds) | C10 (%Pds) | C11(%.Pds) | C12 (%Pds) |
|---|---|---|---|---|---|---|---|
| 10 | 23,53 | 0 | 0 | 23,86 | 47,39 | 0 | 5,22 |
| 11 | 23,53 | 0 | 0 | 23,86 | 0 | 47,39 | 5,22 |
| 12 | 0 | 30,86 | 0 | 16,51 | 47,38 | 0 | 5,25 |
| 13 | 0 | 30,86 | 0 | 16,51 | 0 | 47,38 | 5,25 |
| 14 | 0 | 0 | 29 | 18,36 | 47,37 | 0 | 5,27 |

Dans cette troisième série d'essai, les compositions sont réalisées en faisant varier la nature des monomères époxydes et des liquides ioniques.

### Exemples 15 et 16 : Préparation des compositions 15 et 16

Afin d'améliorer la conductivité ou la tenue mécanique ou de régler les problèmes de viscosité et de réactivité on pourra incorporer des charges et/ou additifs ou effectuer des mélanges de réactifs comme dans les exemples du tableau 5.

**Tableau 5**

| Exemple | C1 (%Pds) | C7 (%Pds) | C11 (%Pds) | C12 (%Pds) | C13 (%Pds) |
|---|---|---|---|---|---|
| 15 | 20,62 | 20,62 | 41,24 | 17,52 | 0 |
| 16 | 22 | 22 | 38,28 | 16,27 | 1,45 |

### Exemples 17 et 18 : Préparation des compositions 17 et 18

Les exemples présentés dans le tableau 6 illustrent la possibilité d'utiliser des mélanges de monomères époxydes et des mélanges de monomères amine dont une monoamine primaire dans la formulation, sans liquide ionique (exemple 17 non conforme) ou avec liquide ionique (exemple 18 conforme).

**Tableau 6**

| Exemple | C5 (%Pds) | C3 (%Pds) | C6 (%Pds) | C9 (%Pds) | C11 (%Pds) | C12 (%Pds) |
|---|---|---|---|---|---|---|
| 17 | 57,16 | 19,05 | 6,55 | 17,24 | 0 | 0 |
| 18 | 22,3 | 7,4 | 2,6 | 6,7 | 36 | 25 |

Dans tous les cas, on obtient des films autoportants. Une mesure à température ambiante de la conductivité ionique est effectuée à l'aide d'un appareil de type Gamery dans une gamme de fréquences allant de 100 à 10⁵ Hz sur des matériaux séchés à 60°C pendant trois jours.

### Résultats : aspect, température de transition vitreuse Tg et conductivité ionique

Le tableau 7 indique les résultats obtenus pour les compositions des exemples 1 à 18. La valeur de la conductivité ionique relative correspond au ratio entre la valeur de la conductivité ionique mesurée pour l'échantillon et la valeur de la conductivité ionique de l'exemple 1. Les résultats montrent le gain de conductivité apporté par les compositions de l'invention par rapport au polymère seul dans le cas d'une application électrolyte.

**Tableau 7**

| Exemple | Aspect | Tg (°C) | Conductivité ionique relative |
|---|---|---|---|
| 1 (non conforme) | Transparent | > 0 | 1 |
| 2 | Opaque - Synérèse | < -5 | 9,7x10⁺⁵ |
| 3 (non conforme) | Transparent | > -10 | 1 |
| 4 | Opaque - Synérèse | < -10 | 7X10⁺⁵ |
| 5 | Opaque - Synérèse | < 0 | 6,4x10⁺⁵ |
| 6 | Transparent-Synérèse | < -10 | 3,7x10⁺⁶ |
| 7 | Transparent-Synérèse | <-20 | 1x10⁺⁷ |
| 8 | Transparent-Synérèse | < -25 | 7,5x10⁺⁶ |
| 9 | Transparent-Sec | < -25 | 5,4x10⁺⁶ |
| 10 | Transparent-Sec | < -25 | 1x10⁺⁷ |
| 11 | Transparent-Synérèse | < -25 | 7,4x10⁺⁶ |
| 12 | Transparent-Synérèse | < 0 | 3,37x10⁺⁶ |
| 13 | Opaque-Sec | > 0 | 1,6x10⁺⁵ |
| 14 | Transparent-Sec | < -5 | 2,3x10⁺⁶ |
| 15 | Transparent-Sec | < -20 | 5,4x10⁺⁵ |
| 16 | Transparent-Sec | < -20 | 4,5x10⁺⁶ |
| 17 (non conforme) | Transparent-Sec | > -20 | 1 |
| 18 | Transparent-Sec | < -20 | 1x10⁺⁶ |

### Exemples 19 à 21 : Préparations des compositions 19 à 21

Une série de formulations est effectuée en substituant du DMF (Diméthylformamide) ou un mélange EC/PC (50%/50% en poids) au liquide ionique. Dans ce cas, la polymérisation est effectuée dans une coupelle métallique revêtue d'un tissu antiadhésif. Le tableau 8 reprend les formulations effectuées.

**Tableau 8**

| Exemple | C1(% pds) | C7(%pds) | C12(% pds) | C10 (% pds) | C 14 (%pds) | C 15 (%pds) | C 16 (%pds) |
|---|---|---|---|---|---|---|---|
| 19 (non conforme) | 23,53 | 23,86 | 5,22 | 0 | 47,39 | 0 | 0 |
| 20 (non conforme) | 23,53 | 23,86 | 5,22 | 0 | 0 | 23,695 | 23,695 |
| 21 (conforme) | 23,53 | 23,86 | 5,22 | 47,39 | 0 | 0 | 0 |

Les échantillons sont pesés avant le cycle de polymérisation de 3 heures à 50°C et de 4 heures à 100°C, effectué en étuve.

Le tableau 9 indique les variations de masse calculées après refroidissement. M1 correspond à la masse relative initiale, M2 à la masse relative finale.

**Tableau 9**

| Exemple | M1 | M2 | Variation de masse (%) |
|---|---|---|---|
| 19 (non conforme) | 100 | 54,09 | 45,91 |
| 20 (non conforme) | 100 | 61,48 | 38,52 |
| 21 (conforme) | 100 | 99,53 | < 0,5 |

Les exemples 19 à 21 illustrent l'intérêt d'utiliser un liquide ionique qui permet d'effectuer l'étape de polymérisation par traitement thermique sans perte de masse importante. Les avantages sont certains en gain d'équipement (pas d'aspiration de composés organiques volatils (COV) et de préparation de l'élément en environnement hermétique). Les solvants organiques classiques sont inutilisables pour ce type de mise en oeuvre opératoire.

On effectue à partir des échantillons réalisés une analyse thermogravimétrique (ATG) sous air de 50°C à 200°C avec une rampe de montée en température de 10°C/min. La perte de masse mesurée est de -3,32% pour l'échantillon 19, de -11,67% pour l'échantillon 20, et dans les limites de mesure de l'appareil pour l'échantillon 21 (-0,17%). Ces essais illustrent l'intérêt d'utiliser un liquide ionique comme plastifiant dans un polymère époxy-amine pour garantir la stabilité thermique du gel jusqu'à 200°C.

Les résultats obtenus pour les compositions selon l'invention, comparés à un matériau de référence polymérisé sans liquide ionique (exemples 1 et 3), font apparaître une plastification additionnelle du réseau par le liquide ionique et une amélioration de la conductivité. La stabilité thermique des mélanges durant la mise en oeuvre est mise en évidence par comparaison à une composition connue de l'art antérieur, par polymérisation de résine époxy-amine en présence de solvant traditionnel (exemples 19 et 20).

## Revendications

1. Composition durcissable gélifiée chimiquement comprenant au moins un composé organique de type époxyde comportant une fonctionnalité supérieure à 1, au moins un composé organique comportant au moins deux fonctions amines primaires, ou au moins une fonction amine primaire et une ou plusieurs fonctions amine secondaire ou amine tertiaire, et au moins un liquide ionique.

2. Composition durcissable selon la revendication 1 dans laquelle le groupe époxyde est choisi parmi les époxydes aromatiques, cycloaliphatiques, hétérocycliques, ou aliphatiques, substitués ou non par des chaînes aliphatiques, cycloaliphatiques, aromatiques ou hétérocycliques ou des éléments choisis parmi le fluor et le brome, la chaîne principale ou les substituants comportant éventuellement des segments de chaîne carbonés et/ou hydrocarbonés comprenant des éléments autres que le carbone, l'hydrogène et l'oxygène et des groupements susceptibles de réagir chimiquement, utilisés seuls ou en mélange.

3. Composition durcissable selon l'une des revendications précédentes dans laquelle les fonctions amines sont de type aromatique, hétérocyclique, cycloaliphatique ou aliphatique substituées ou non substituées par des chaînes aliphatiques, la chaîne principale ou les substituants comportant éventuellement des éléments choisis parmi le silicium, le fluor, le soufre, le chlore et le brome.

4. Composition durcissable selon l'une des revendications précédentes dans laquelle le cation du liquide ionique est choisi parmi les tétraalkylammonium, les cations provenant d'amines cycliques aromatiques (di- et tri, et tetraalkylimidazolium, alkylpyridinium) ou provenant d'amines cycliques aliphatiques (di et tri alkyl pipéridinium, dialkylpyrrolidinium, dialkylmorpholinium), les tétraalkylphosphonium et les trialkylsulfonium et l'anion du liquide ionique est choisi parmi les halogénures (F, Cl⁻, Br⁻, I⁻...), les ions nitrate, phosphate, sulfate, perchlorate [ClO₄]⁻, [BF₄]⁻, [PF₆]⁻, [AsF₆)⁻, [N(CN)₂]⁻, [C(CN)₃]⁻, les ions [C₄F₉SO₃]⁻, trifluoroacétate [CF₃CO₂]⁻, triflate [CF₃SO₃]⁻, imidures [N(CF₃SO₂)₂]⁻, [CF₃CONCF₃SO₂]⁻, [C(CF₃SO₂)₃]⁻, acétate [CH₃CO₂]⁻ et formiate [HCO₂]⁻.

5. Composition durcissable selon l'une des revendications précédentes comprenant des additifs solides ou liquides choisis dans le groupe formé par les polymères, les sels, les charges choisies parmi les silices modifiées (greffées) ou non modifiées, les alumines, les oxydes de titane, les oxydes d'aluminium, les titanates, les argiles modifiées ou non modifiées, les micas, les céramiques, les zéolites, les fibres, les composés tensio-actifs .

6. Composition durcissable selon la revendication 5 contenant au moins un sel de lithium.

7. Composition durcissable selon l'une des revendications précédentes dans laquelle le rapport stoechiométrique époxyde/amine r (rapport des produits de la fonctionnalité par la concentration de chaque monomère) est compris entre 0,25 et 1,75.

8. Procédé de préparation d'une composition selon l'une des revendications précédentes dans lequel on effectue :
c. une étape de mélange d'au moins un composé organique de type époxyde comportant une fonctionnalité supérieure à 1, d'au moins un composé organique comportant au moins deux fonctions amines primaires, ou au moins une fonction amine primaire et une ou plusieurs fonctions amine secondaire ou amine tertiaire et d'au moins un liquide ionique et des additifs éventuels;
d. une étape de polymérisation du polymère polyépoxyde-polyamine.

9. Procédé de préparation selon la revendication 8 dans lequel l'étape de polymérisation est réalisée par traitement thermique.

10. Procédé de préparation selon la revendication 8 ou 9 dans lequel on choisit le groupe époxyde et le groupe amine tels que le couple polyépoxyde-polyamine en mélange époxy-amine seul après polymérisation conduise à une température de transition vitreuse Tg inférieure ou égale à 150°C mesurée par la technique de DSC de -70 à 200°C sous azote avec une rampe de montée en température de 10°C/min .

11. Procédé de préparation selon la revendication 10 dans laquelle le groupe époxyde et le groupe amine sont choisis tels que le couple polyépoxyde-polyamine en mélange époxy-amine seul après traitement thermique conduise à une température de transition vitreuse Tg inférieure ou égale à 50°C mesurée par la technique de DSC de -70 à 200°C sous azote avec une rampe de montée en température de 10°C/min .

12. Électrolyte gélifié comprenant la composition selon l'une des revendications 1 à 7.

13. Système d'accumulation ou de conversion d'énergie comprenant un électrolyte selon la revendication 12.

14. Système de conversion d'énergie selon la revendication 13 de type dispositif électrochrome ou cellule solaire photoélectrochimique.

15. Système d'accumulation d'énergie selon la revendication 13 de type batterie ou supercondensateur.

16. Système d'accumulation d'énergie selon la revendication 15 de type batterie agissant par mécanismes d'insertion et désinsertion ioniques.

17. Système d'accumulation d'énergie selon la revendication 16 de type batterie Li-Ion.

18. Utilisation d'une batterie et/ou d'un supercondensateur selon l'une des revendications 15 à 17 pour un véhicule hybride électrique ou un véhicule électrique.

19. Procédé de préparation d'une cellule élémentaire de batterie comprenant les étapes suivantes :
a) dépôt en continu par enduction de la composition selon l'une des revendications 1 à 7 sur une électrode,
b) recouvrement de l'électrode enduite par la seconde électrode,
c) durcissement in situ de la composition
et répétition éventuelle des étapes a), b), c) pour constituer un assemblage solide mono ou multi couches "électrode-électrolyte-électrode".

## Claims

1. A chemically gelled curable composition comprising at least one organic compound of epoxide type comprising a functionality above 1, at least one organic compound comprising at least two primary amine functions, or at least one primary amine function and one or more secondary amine or tertiary amine functions, and at least one ionic liquid.

2. A curable composition as claimed in claim 1, wherein the epoxide group is selected from among aromatic, cycloaliphatic, heterocyclic or aliphatic epoxides, substituted or not by aliphatic, cycloaliphatic, aromatic or heterocyclic chains, or elements selected from among fluorine and bromine, the main chain or the substituents optionally comprising carbon and/or hydrocarbon chain segments comprising elements other than carbon, hydrogen and oxygen, and groups likely to react chemically, used alone or in admixture.

3. A curable composition as claimed in any one of the previous claims, wherein the amine functions are of aromatic, heterocyclic, cycloaliphatic or aliphatic type, substituted or not by aliphatic chains, the main chain or the substituents optionally comprising elements selected from among silicon, fluorine, sulfur, chlorine and bromine.

4. A curable composition as claimed in any one of the previous claims, wherein the cation of the ionic liquid is selected from among tetraalkylommonium, cations from aromatic cyclic amines (di- and tri, and tetraalkylimidazolium, alkylpyridinium) or from aliphatic cyclic amines (di and tri alkyl piperidinium, dialkylpyrrolidinium, dialkylmorpholinium), tetraalkylphosphonium and trialkylsulfonium, and the anion of the ionic liquid is selected from among halogenides (F-, Cl⁻, Br⁻, I⁻...), the following ions: nitrate, phosphate, sulfate, perchlorate [ClO_{4]}⁻, [BF₄]⁻, [PF6]⁻, [AsF₆]⁻, [N(CN)₂]⁻, [C(CN)₃]⁻, the ions [C₄F₉SO₃]-, trifluoroacetate [CF₃CO₂]-, triflate [CF₃SO₃]-, imidides [N(CF₃SO₂)₂]⁻, [CF₃CONCF₃SO₂]-, [C(CF₃SO₂)₃]-, acetate [CH₃CO₂]- and formiate [HCO₂]-.

5. A curable composition as claimed in any one of the previous claims, comprising solid or liquid additives selected from the group made up of polymers, salts, fillers selected from among modified (grafted) or non-modified silicas, aluminas, titanium oxides, aluminium oxides, titanates, modified or non-modified clays, micas, ceramics, zeolites, fibers, surfactant compounds.

6. A curable composition as claimed in claim 5, containing at least one lithium salt.

7. A curable composition as claimed in any one of the previous claims, wherein the stoichiometric epoxide/amine ratio r (ratio of the functionality products to the concentration of each monomer) ranges between 0.25 and 1.75.

8. A method of preparing a composition as claimed in any one of the previous claims, comprising:
a. a stage of mixing at least one organic compound of epoxide type comprising a functionality above 1 with at least one amine and at least one ionic liquid, and optionally additives;
b. a stage of polymerizing the polyepoxide-polyamine polymer.

9. A preparation method as claimed in claim 8, wherein the polymerization stage is carried out by thermal treatment.

10. A preparation method as claimed in claim 8 or 9, wherein the epoxide group and the amine group are preferably so selected that the polyepoxide-polyamine pair in epoxy-amine admixture alone after polymerization leads to a glass-transition temperature Tg measured using the DSC technique less than or equal to 150°C.

11. A preparation method as claimed in claim 10, wherein the epoxide group and the amine group are preferably so selected that the polyepoxide-polyamine pair in epoxy-amine admixture alone after thermal treatment leads to a glass-transition temperature Tg measured using the DSC technique less than or equal to 50°C.

12. A gelled electrolyte comprising the composition as claimed in any one of claims 1 to 7.

13. An energy accumulation or conversion system comprising an electrolyte as claimed in claim 12.

14. An energy conversion system as claimed in claim 13 of electrochrome device or photoelectrochemical solar cell type.

15. An energy accumulation system as claimed in claim 13 of battery or supercondensor type.

16. An energy accumulation system as claimed in claim 15 of battery type operating through ionic insertion and disinsertion mechanisms.

17. An energy accumulation system as claimed in claim 16 of Li-ion battery type.

18. Use of a battery and/or of a supercondensor as claimed in any one of claims 15 to 17 for a hybrid electric vehicle or an electric vehicle.

19. A method of preparing an elementary battery cell comprising the following stages:
a) continuous coating deposition of the composition as claimed in any one of claims 1 to 7 on an electrode,
b) covering the coated electrode with the second electrode,
c) in-situ hardening of the composition,
and optionally repeating stages a), b), c) so as to form a solid single or multi-layer « electrode-electrolyte-electrode » assembly.

## Patentansprüche

1. Chemisch gelierte, härtbare Zusammensetzung, umfassend mindestens eine organische Verbindung vom Typ Epoxid, umfassend eine Funktionalität größer als 1, mindestens eine organische Verbindung, umfassend mindestens zwei primäre Aminfunktionen, oder mindestens eine primäre Aminfunktion und eine oder mehrere sekundäre oder tertiäre Aminfunktionen und mindestens eine ionische Flüssigkeit.

2. Härtbare Zusammensetzung nach Anspruch 1, wobei die Epoxygruppe ausgewählt ist aus heterocyclischen oder aliphatischen, cycloaliphatischen, aromatischen Epoxiden, substituiert oder nicht mit aliphatischen, cycloaliphatischen, aromatischen oder heterocyclischen Ketten oder Elementen, ausgewählt aus Fluor und Brom, wobei die Hauptkette oder die Substituenten gegebenenfalls Segmente von Kohlenstoff- und/oder Kohlenwasserstoffketten, die Elemente umfassen, die verschieden von Kohlenstoff, Wasserstoff und Sauerstoff sind, und Gruppen, die fähig sind, chemisch zu reagieren, allein oder als Gemisch verwendet, umfassen.

3. Härtbare Zusammensetzung nach einem der vorhergehenden Ansprüche, wobei die Aminfunktionen aromatischen, heterocyclischen, cycloaliphatischen oder aliphatischen Typs sind, substituiert oder nicht substituiert mit aliphatischen Ketten, wobei die Hauptkette oder die Substituenten gegebenenfalls Elemente umfassen, ausgewählt aus Silicium, Fluor, Schwefel, Chlor und Brom.

4. Härtbare Zusammensetzung nach einem der vorhergehenden Ansprüche, wobei das Kation der ionischen Flüssigkeit ausgewählt ist aus Tetraalkylammonium, Kationen von aromatischen cyclischen Aminen (Di - und Tri- und Tetraalkylimidazolium, Alkylpyridinium) oder von aliphatischen cyclischen Aminen (Di- und Trialkylpiperidinium, Dialkylpyrrolidinium, Dialkylmorpholinium), Tetraalkylphosphonium und Trialkylsulfonium und wobei das Anion der ionischen Flüssigkeit ausgewählt ist aus den Halogeniden (F⁻, Cl⁻, Br⁻, I⁻ usw.), den Nitrat-, Phosphat-, Sulfat-, Perchlorationen [ClO₄]⁻, [BF₄]⁻, [PF₆]⁻, [AsF₆]⁻, [N(CN)₂]⁻, [C(CN)₃]⁻, den Ionen [C₄F₉SO₃]⁻, Trifluoracetat [CF₃CO₂]⁻, Triflat [CF₃SO₃]⁻, den Imiden [N(CF₃SO₂)₂]⁻, [CF₃CONCF₃SO₂]⁻, [C(CF₃SO₂)₃]⁻, Acetat [CH₃CO₂]⁻ und Formiat [HCO₂]⁻.

5. Härtbare Zusammensetzung nach einem der vorhergehenden Ansprüche, umfassend feste oder flüssige Zusatzstoffe, ausgewählt aus der Gruppe gebildet aus Polymeren, Salzen, Füllstoffen, ausgewählt aus modifizierten (gepfropften) oder nicht modifizierten Siliciumdioxiden, Aluminiumoxiden, Titanoxiden, Aluminiumoxiden, Titanaten, modifizierten oder nicht modifizierten Tonen, Glimmermaterialien, Keramikmaterialien, Zeolithen, Fasern, grenzflächenaktiven Verbindungen.

6. Härtbare Zusammensetzung nach Anspruch 5, enthaltend mindestens ein Lithiumsalz.

7. Härtbare Zusammensetzung nach einem der vorhergehenden Ansprüche, wobei das stöchiometrische Epoxid/Amin-Verhältnis r (Verhältnis der Funktionalitätsprodukte zur Konzentration jedes Monomers) im Bereich zwischen 0,25 und 1,75 liegt.

8. Verfahren zur Herstellung einer Zusammensetzung nach einem der vorhergehenden Ansprüche, bei dem durchgeführt werden:
c. ein Schritt zum Mischen mindestens einer organischen Verbindung vom Typ Epoxid, umfassend eine Funktionalität größer als 1, mindestens eines Amins und mindestens einer ionischen Flüssigkeit und gegebenenfalls Zusatzstoffen;
d. ein Schritt zur Polymerisation des Polyepoxid-Polyamin-Polymers.

9. Verfahren zur Herstellung nach Anspruch 8, wobei der Schritt zur Polymerisation durch Wärmebehandlung ausgeführt wird.

10. Verfahren zur Herstellung nach Anspruch 8 oder 9, wobei die Epoxidgruppe und die Amingruppe derart ausgewählt wird, dass das Polyepoxid-Polyamin-Paar als Epoxy-Amin-Gemisch allein nach der Polymerisation zu einer Glasübergangstemperatur Tg, gemessen mit DSK-Technik, von kleiner oder gleich 150 °C führt.

11. Verfahren zur Herstellung nach Anspruch 10, wobei die Epoxidgruppe und die Amingruppe derart ausgewählt sind, dass das Polyepoxid-Polyamin-Paar als Epoxy-Amin-Gemisch allein nach der thermischen Behandlung zu einer Glasübergangstemperatur Tg von kleiner oder gleich 50 °C führt.

12. Gelierter Elektrolyt, umfassend die Zusammensetzung nach einem der Ansprüche 1 bis 7.

13. Energieakkumulations- oder Energieumwandlungssystem, umfassend einen Elektrolyten nach Anspruch 12.

14. Energieumwandlungssystem nach Anspruch 13 vom Typ elektrochrome Vorrichtung oder photoelektrochemische Solarzelle.

15. Energieakkumulationssystem nach Anspruch 13 vom Typ Batterie oder Superkondensator.

16. Energieakkumulationssystem nach Anspruch 15 vom Typ Batterie, das durch loneneinlagerungs- und lonenauslagerungsmechanismen wirkt.

17. Energieakkumulationssystem nach Anspruch 16 vom Typ Li-lonen-Batterie.

18. Verwendung einer Batterie und/oder eines Superkondensators nach einem der Ansprüche 15 bis 17 für ein Hybridfahrzeug oder ein Elektrofahrzeug.

19. Verfahren zur Herstellung einer Batterieelementarzelle, umfassend die folgenden Schritte:
a) kontinuierliches Schichtabscheiden der Zusammensetzung nach einem der Ansprüche 1 bis 7 auf einer Elektrode,
b) Bedecken der beschichteten Elektrode mit der zweiten Elektrode,
c) Härten der Zusammensetzung in situ und gegebenenfalls Wiederholen der Schritte a), b), c), um eine feste ein- oder mehrschichtige "Elektrode-Elektrolyt-Elektrode"-Einheit zu bilden.
